# EUROPEAN PATENT APPLICATION

(11) **EP 2 432 054 A1**
(43) Date of publication of application: **21.03.2012**
(21) Application number: 11157331.7
(22) Date of filing: 08.03.2011
(51) Int. Cl.: H01M 4/62, H01M 10/0525

(54) **Negative electrode for a rechargeable lithium battery and rechargeable lithium battery including the samee**

(30) Priority: 17.08.2010 KR 20100079320
(71) Applicant: Samsung SDI Co., Ltd., Yongin-si, Gyeonggi-do (KR)
(72) Inventor: Sheem, Kyeu-Yoon, Gyeonggi-do (KR); Ka, Bok-Hyun, Gyeonggi-do (KR); Ishida, Sumihito, Gyeonggi-do (KR); Han, Da-Woon, Gyeonggi-do (KR)
(74) Representative: Sampson, Eimear

(57) **Abstract**

A negative electrode for a rechargeable lithium battery and a rechargeable lithium battery including the same, the negative electrode including a negative active material, and a lithium ion adsorbent having a specific surface area of about 10 m²/g to about 100 m²/g.

## Description

The present invention relates to a negative electrode for a rechargeable lithium battery and a rechargeable lithium battery including the same.

An energy storage device based on electrochemical reaction may include two electrodes, an electrolyte that transfers ions, and a separation film. The electrochemical reaction of the energy storage device may mostly occur on a surface of an electrode and may not be a uniform reaction.

The electrochemical reaction may be classified as a mass transfer reaction in which chemical species separated from an electrolyte are transferred to the surface of the electrode, an absorption/desorption reaction in which the transferred chemical species form an electrical double layer, and an electron transfer reaction.

Herein, the reaction species may have a non-faradaic reaction in which they are desorbed during formation of an electrical double layer on the electrode surface, or a faradaic reaction in which they are directly provided with electrons and oxidized (or reduced). Energy storage units using the former reaction may include, e.g., a super capacitor (or electric bilayer capacitor). Energy storage units using the latter reaction may include, e.g., a lithium rechargeable battery.

Recently, research on adding activated carbon, which is a component of a capacitor, into a negative electrode has been performed in order to improve power performance of a rechargeable lithium battery.

When a rechargeable lithium battery is charged/discharged to a voltage of about 3.0 V to about 4.3 V (which means that the charge/discharge is performed at about 1 V or less based on lithium when only a negative electrode potential is considered), differently from a positive electrode, the negative electrode may undergo a SEI (solid electrolyte interface) film generation reaction as lithium ions are diffused into an inside of carbon-based crystal, which is a negative active material, through an intercalation reaction.

It may be desirable to utilize a carbon material having a structure that is able to quickly diffuse ions or adsorb many ions while minimizing formation of the SEI film, e.g., ensuring the SEI film is as thin or small as possible, in order to use the carbon material, which, as described above is a capacitor component, for a negative electrode.

In a first aspect of the present invention there is provided a negative electrode for a rechargeable lithium battery, the negative electrode including a negative active material, and a lithium ion adsorbent having a specific surface area of about 10 m²/ g to about 100 m²/g.

The specific surface area of the lithium ion adsorbent may be about 10 m²/g to about 50 m²/g.

The lithium ion adsorbent may show 2θ=23°±5.0° and 2θ=26.5°±1.0° peaks at the (002) plane when its X-ray diffraction is measured using a CuKα ray, and may have a ratio (b/a) of about 0.1 to about 10, b being a height of the peak at 2θ=26.5°±1.0° and a being a height of the peak at 2θ=23°±5.0°.

The lithium ion adsorbent may have a ratio (b/a) of about 0.1 to about 1, b being the height of the peak at 2θ=26.5°±1.0° and a being the height of the peak at 2θ=23°±5.0°.

The lithium ion adsorbent may have interplanar spacing d002 of about 0.34 nm to about 1 nm, measured by X-ray diffraction using a CuKα ray.

The lithium ion adsorbent may have interplanar spacing d002 of about 0.35 nm to about 0.8 nm, measured by X-ray diffraction using a CuKα ray.

The lithium ion adsorbent may have a tap density of about 0.3 g/cc to about 1.0 g/cc.

The negative active material and the lithium ion adsorbent may be included at a weight ratio of about 99:1 to about 50:50.

The negative electrode may further include a conductive material.

The lithium ion adsorbent may include crystalline carbon including natural graphite, artificial graphite, mesophase carbon microbeads, or a combination thereof.

The negative active material may include a material capable of reversibly intercalating/deintercalating lithium ions, a lithium metal, a metal alloy of lithium, a material capable of doping and dedoping lithium, or a transition metal oxide.

In a second aspect of the present invention there is provided a rechargeable lithium battery including a negative electrode; a positive electrode; and an electrolyte, wherein the negative electrode includes a negative active material, and a lithium ion adsorbent having a specific surface area of about 10 m²/g to about 100 m²/g.

The lithium ion adsorbent may show 2θ=23°±5.0° and 2θ=26.5°±1.0° peaks at the (002) plane when its X-ray diffraction is measured using a CuKα ray, and may have a ratio (b/a) of about 0.1 to about 10, b being a height of the peak at 2θ=26.5°±1.0° and a being a height of the peak at 2θ=23'±5.0'.

The lithium ion adsorbent may have interplanar spacing d002 of about 0.34 nm to about 1 nm, measured by X-ray diffraction using a CuKα ray.

The lithium ion adsorbent may have interplanar spacing d002 of about 0.35 nm to about 0.8 nm, measured by X-ray diffraction using a CuKα ray.

The lithium ion adsorbent may have a tap density of about 0.3 g/cc to about 1.0 g/cc.

The negative active material and the lithium ion adsorbent may be included at a weight ratio of about 99:1 to about 50:50.

The negative electrode may further include a conductive material.

The lithium ion adsorbent may include crystalline carbon including natural graphite, artificial graphite, mesophase carbon microbeads, or a combination thereof.

The negative active material may include a material capable of reversibly intercalating/deintercalating lithium ions, a lithium metal, a metal alloy of lithium, a material capable of doping and dedoping lithium, or a transition metal oxide.

In a third aspect of the present invention there is provided use of a lithium ion adsorbent having a specific surface area of about 10 m²/g to about 100 m²/g in a negative electrode of a rechargeable lithium battery.

A more complete appreciation of the present invention, and many of the attendant advantages thereof, will be readily apparent as the same becomes better understood by reference to the following detailed description when considered in conjunction with the accompanying drawings, wherein:

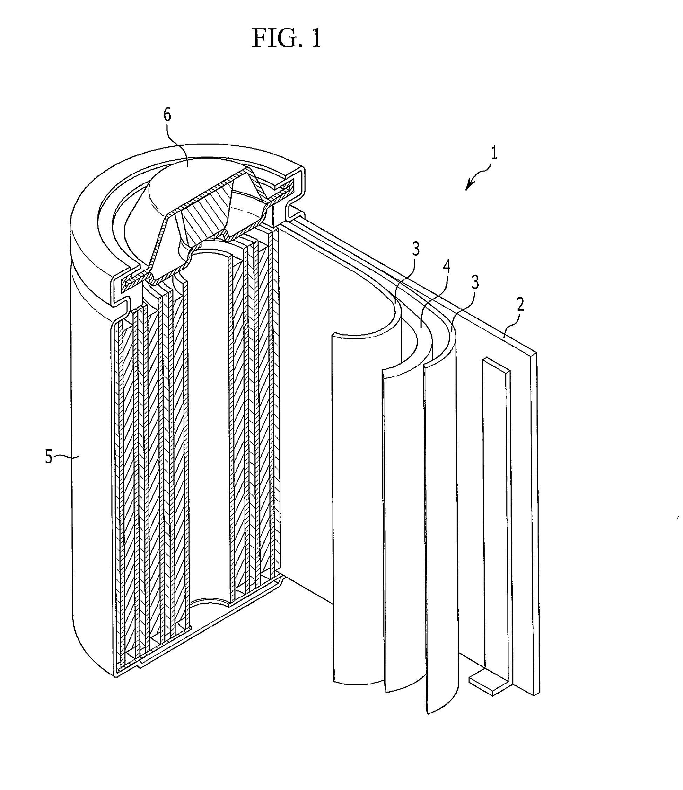

Figure 1 illustrates a schematic view of a rechargeable lithium battery according to an embodiment of the present invention.

Example embodiments will now be described more fully hereinafter with reference to the accompanying drawing.

In the accompanying figure, the dimensions of layers and regions may be exaggerated for clarity of illustration. It will also be understood that when a layer or element is referred to as being "on" another element, it can be directly on the other element, or intervening elements may also be present. In addition, it will also be understood that when an element is referred to as being "between" two elements, it can be the only element between the two elements, or one or more intervening elements may also be present. Like reference numerals refer to like elements throughout.

The negative electrode for a rechargeable lithium battery according to the first aspect may include a negative active material and a lithium ion adsorbent having a specific surface area of about 10 m²/g to about 100 m²/g.

The lithium ion adsorbent may include a material that not only adsorbs/desorbs lithium ions, but that may also intercalate/deintercalate lithium ions. For example, in the lithium ion adsorbent, only desolvated lithium ions may be intercalated between lithium ion adsorbent layers and lithium ions may adhere to a surface of the lithium ion adsorbent along with electrolyte ions, or alternatively, lithium ions may intercalate between lithium ion adsorbent layers.

As described above, the lithium ion adsorbent may have a specific surface area of about 10 m²/g to about 100 m²/g. Maintaining the specific surface area of the lithium ion adsorbent at about 10 m²/g or greater may help ensure that interplanar control of the lithium ion adsorbent is sufficiently performed. Accordingly, a desirable effect caused by the use of the interplanar controlled adsorbent may be achieved. Maintaining the specific surface area of the lithium ion adsorbent at about 100 m²/g or less may help prevent excessive production of SEI film on the surface of the negative electrode, may help ensure that efficiency is maintained, and may help prevent excessive electrolyte decomposition on the surface of the electrode. In an embodiment, the lithium ion adsorbent may have a specific surface area of about 10 m²/g to about 50 m²/g.

The lithium ion adsorbent may have a very small specific surface area compared to activated carbon (e.g., which may have a specific surface area of about 1000 m²/g to about 3500 m²/g). Thus, an area contacting the electrolyte may also be small so as to suppress the electrolyte decomposition reaction. In addition, the specific surface area may be small enough to prevent and control adsorption of moisture, thereby minimizing gas generation reactions caused by the adsorbed moisture.

The lithium ion adsorbent may have an interlayer structure. For example, by using a crystalline carbon material as a precursor and performing an oxidation reaction and heat treatment, the lithium ion adsorbent may have increased interplanar spacing, when compared with untreated crystalline carbon material, which may include many defects in a carbon layer thereof and thus may have a low crystallinity.

The crystalline carbon used for the precursor may include, e.g., natural graphite such as flake natural graphite, artificial graphite such as mesophase carbon microbeads, or a combination thereof. The artificial graphite may include artificial graphite obtained by heating soft carbon at a temperature of about 2500 °C or higher.

The lithium ion adsorbent may show 2θ=23º±5.0º and 2θ=26.5°±1.0° peaks at the (002) plane when its X-ray diffraction is measured using a CuKα ray. The lithium ion adsorbent may have a ratio (b/a) of about 0.1 to about 10, wherein b is a height of the peak at 2θ=26.5°±1.0° and a is a height of the peak at 2θ=23°±5.0°. In an embodiment, the lithium ion adsorbent may have a ratio (b/a) of about 0.1 to about 1.

Maintaining the ratio (b/a) of the peak height (b) at 2θ₌26.5°±1.0° to the peak height (a) appearing at 2θ=23^{º}±5.0^{º} at about 0.1 to about 10 may help ensure that the carbon material has an effect of reducing resistance caused by the adsorption/desorption of ions, due to increased interplanar spacing. In an embodiment, when the ratio (b/a) of a peak height (b) appearing at 2θ=26.5°±1.0° to a peak height (a) appearing at the 2θ=23°±5.0° is about 0.1 to about 1, the effect of decreasing resistance may be enhanced while further improving the effect.

Typical graphite may have a single peak at about 26°, so having the XRD property described above indicates that interplanar spacing of the carbon material is controlled.

The lithium ion adsorbent according to an embodiment may have interplanar spacing d002 of about 0.34 nm to about 1 nm, measured by X-ray diffraction using a CuKα ray. In an embodiment, the interplanar spacing d002 is about 0.35 nm to about 0.8 nm.

Maintaining the interplanar spacing d002 of the lithium ion adsorbent at about 0.34 nm to about 1 nm may help facilitate intercalation/deintercalation of lithium ions to/from a carbon material layer. Also, the adsorption/desorption of ions on the surface may occur quickly on the surface. Thus, output characteristics may be improved. Accordingly, the lithium ion adsorbent may be applicable to an area requiring high input and output.

If expanded graphite having an interplanar spacing of about 0.333 nm to about 0.34 nm is used as a lithium ion adsorbent, similar interplanar spacing and X-ray diffraction characteristics to those of a carbon material that is used as a negative active material, such as natural graphite or artificial graphite, may be acquired. Thus, the effect of improving the diffusion speed of lithium ions may not be acquired from the additional use of the expanded graphite.

The lithium ion adsorbent may include a crystalline carbon material. Thus, it may include fewer cavities than amorphous carbon and may exhibit inherent properties caused by the crystalline carbon having high conductivity. Accordingly, the lithium ion adsorbent may have interplanar spacing suitable for absorbing/desorbing desolvated ions and may maintain conductivity. Thus, it may exhibit maximized diffusion characteristics.

The lithium ion adsorbent may have a tap density of about 0.3 g/cc to about 1.0 g/cc. Maintaining the tap density of the lithium ion adsorbent at about 0.3 g/cc to about 1.0 g/cc may help ensure that the interplanar spacing is suitably maintained for an electrode material and that a decrease of capacity may be minimized due to sufficient electrode density after electrode fabrication.

The lithium ion adsorbent included in the negative electrode of the present invention may be prepared in accordance with the following process.

First, an oxidizing agent may be added to a mixture of crystalline carbon and acid to oxidize the crystalline carbon and acid.

The mixture of crystalline carbon and acid may be prepared by adding the acid to the crystalline carbon. The crystalline carbon may include, e.g., natural graphite, artificial graphite, mesophase carbon microbeads, or a combination thereof. The artificial graphite may include, e.g., soft carbon acquired through heat treatment at about 2,500 °C or higher.

The acid may include, e.g., H₂SO₄, HN0₃, H₃PO₄, H₄P₂O₇, H₃As0₄, HF, H₂SeO₄, HC10₄, CF₃COOH, BF₃(CH₃COOH)₂, HS0₃F, H₅IO_{6,} or a combination thereof.

The crystalline carbon and acid may be mixed in a weight ratio of about 1:99 to about 50:50.

The oxidizing agent may include, e.g., KMn0₄, NaN0₃, KClO₃, NaC10₃, NH₄Cl0₃, AgC10₃, HC10₃, NaC10₄, NH₄C10₄, CrO₃, (NH₄)₂S₂O₈, Pb0₂, Mn0₂, As₂O₅, Na₂0₂, H₂O₂, N₂0₅, or a combination thereof.

The oxidizing agent may be added to the mixture stepwise, in about 10 to about 100 steps in portions of about 1 part by weight to about 15 parts by weight per step, based on 100 parts by weight of the crystalline carbon, so that a total amount of the oxidizing agent added may be about 50 parts by weight to about 700 parts by weight, based on 100 parts by weight of the crystalline carbon. Adding portions of about 1 part by weight to about 15 parts by weight of the oxidizing agent about 10 times to about 100 times may help ensure that a uniform oxidation reaction occurs.

Adding the oxidizing agent to the mixture causes an oxidation of the crystalline carbon. The resulting mixture may be allowed to stand for about 1 day to about 10 days for better oxidation. Standing times may be suitably controlled depending on the kind of crystalline carbon used.

Next, the oxidized crystalline carbon may be dried. The drying may be performed by separating the oxidized crystalline carbon from the acid and the oxidizing agent and then washing the oxidized crystalline carbon to improve purity in a shorter time. The drying may be performed at a temperature of about 100 °C to about 150 °C. The drying may be performed for a sufficient time to remove moisture from the oxidized crystalline carbon and has no particular limit.

Then the product may be primarily heat-treated under vacuum by increasing a temperature at a temperature increase rate of about 0.3 °C/min to about 5.0 °C/min to a temperature of about 150 °C to about 250 °C.

The vacuum may be maintained at a pressure of about 0.01 mbar to about 0.1 mbar. The primary heat treatment may be performed for about 1 hour to about 48 hours. When the primary heat treatment is performed under these conditions, the oxidizing agent may be removed slowly so the interplanar spacing of the carbon material may be controlled to a desired level.

The primary heat-treated product may then be secondarily heat-treated under an inert atmosphere by increasing a temperature at a temperature increase rate of about 1.0 °C/min to about 10.0 °C/min to a temperature of about 250 °C to about 500 °C, and maintaining the increased temperature. The temperature may be maintained for about 1 hour to about 24 hours. As described above, the heat treatment process may be performed twice, i.e., the primary heat treatment and the secondary heat treatment. Thus, the interplanar spacing may not only maintain a wide structure to accelerate the intercalation/deintercalation of lithium but may also remove functional groups from the inside/outside of the layers. Therefore, initial reversible efficiency may be improved.

The inert atmosphere may include, e.g., nitrogen, argon, or a combination thereof. Also, the inert atmosphere may be achieved by providing the inert gas at a rate of about 5 ml/min to about 50 ml/min. Providing the inert gas at a rate of about 5 ml/min to about 50 ml/min may help ensure that gas generated during the heat treatment is appropriately discharged and that the inert atmosphere is well maintained.

When the heat treatment is gradually performed at a predetermined temperature increasing rate, the acid and the oxidizing agent among layers may be released at a low speed, thereby preparing a material with high density. In contrast, if the heat treatment were performed by instantly or quickly increasing to a high temperature (e.g., 900 °C), the acid and oxidizing agent may be instantly released as gas. Accordingly, the crystalline carbonaceous material may have severely expanded interplanar spacing and may be partly broken. Thus, it may have an improved surface area but a sharply decreased density. Accordingly, preparing the lithium ion adsorbent using the method described above may help avoid drawbacks associated with the crystalline carbonaceous material having less absorption per unit volume.

Furthermore, the method described above may provide a carbonaceous material with excellent conductivity by developing a graphite layer therein through a nonuniform reaction. The carbonaceous material layer may include a graphite layer including both a perfect graphite crystal layer and an expanded gap between the layers (2 phases). When the double-phased crystalline composite graphite is prepared by effectively controlling the interplanar spacing of graphite, two significant peaks may be shown at about 2θ=26.5° and about 2θ=10° to 26.5° measured through XRD.

In the negative electrode according to an embodiment of the present invention, the negative active material may include a material capable of reversibly intercalating/deintercalating lithium ions, a lithium metal, a metal alloy of lithium, a material capable of doping and dedoping lithium, or a transition metal oxide.

The material capable of reversibly intercalating/deintercalating lithium ions may include any suitable carbonaceous material, which may include any carbonaceous negative active material generally used for a rechargeable lithium battery. For example, the carbonaceous material may include crystalline carbon, amorphous carbon, or a mixture thereof. The crystalline carbon may include, e.g., graphite such as amorphous, sheet-type, flake-type, spherical, or fibrous natural graphite or artificial graphite. The amorphous carbon may include, e.g., soft carbon or hard carbon, mesophase pitch carbide, and fired coke.

The lithium metal alloy may include lithium and a metal including at least one of Na, K, Rb, Cs, Fr, Be, Mg, Ca, Sr, Si, Sb, Pb, In, Zn, Ba, Ra, Ge, Al, and Sn.

The material capable of doping and dedoping lithium may include, e.g., Si, SiOₓ (0 < x < 2), a Si-Q alloy (where Q is an element including, e.g., an alkaline metal, an alkaline-earth metal, a group 13 element, a group 14 element, a transition element, a rare earth element, and combinations thereof, and is not Si), Sn, Sn0₂, a Sn-R alloy (where R is an element including, e.g., an alkaline metal, an alkaline-earth metal, a group 13 element, a group 14 element, a transition element, a rare earth element, and combinations thereof, and is not Sn), and mixtures thereof. At least one of these materials may be mixed with Si0₂. The elements Q and R may each independently include, e.g., Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ti, Ge, P, As, Sb, Bi, S, Se, Te, Po, and a combination thereof.

The transition metal oxide may include, e.g., vanadium oxide, lithium vanadium oxide of the following Chemical Formula 1 or 2, or lithium titanium oxide of the following Chemical Formula 3.

Liₓ₁V_{y1}M_{d1}O₂₊ₑ₁ [Chemical Formula 1]

In Chemical Formula 1, 1 ≤ x1 ≤2.5, 0.5 ≤ y1 ≤ 1.5, 0 ≤ d1 ≤ 0.5, 0 ≤ e1 ≤ 0.5, and M may include, e.g., Mg, Al, Cr, Mo, Ti, W, Zr, Si, Sc, Cu, Zu, Nb, Y, or a combination thereof.

Liₓ₂M'_{y2}V _{2-y2}O_{6-z2} [Chemical Formula 2]

In Chemical Formula 2, 0 ≤ x2 ≤ 1.2, 0 ≤ y2 ≤ 2, -2 ≤ z2 ≤ 2, and M' may include, e.g., Mo, Mn, Co, Ni, or a combination thereof.

Liₓ₃Ti_{y3-z3}M" _{Z3}O_{4-z4} [Chemical Formula 3]

In Chemical Formula 3, 0.6 ≤ x3 ≤ 2.5, 1.2 ≤ y3 ≤ 2.3, 0 ≤ z3 ≤ 0.5, 0 ≤ z4 ≤ 0.5, and M" may include, e.g., V, Cr, Nb, Fe, Ni, Co, Mn, W, Al, Ga, or a combination thereof.

The negative electrode may include a negative active material layer including the negative active material and a current collector. The negative active material may be included in an amount of about 95 wt% to about 99 wt%, based on a total weight of the negative active material layer.

The negative active material layer may include a binder. The negative active material layer may include about 1 wt% to about 5 wt% of the binder, based on the total weight of the negative active material layer. In an embodiment, the negative active material layer may include a conductive material. When the negative active material layer includes the conductive material, the negative active material layer may include about 90 wt% to about 98 wt% of the negative active material, about 1 wt% to about 5 wt% of the binder, and about 1 wt% to about 5 wt% of the conductive material.

The conductive material may be included to improve electrode conductivity. It may include any suitable electrically conductive material unless it causes an adverse chemical change. The conductive material may include, e.g., carbon-based materials such as natural graphite, artificial graphite, carbon black, acetylene black, ketjen black, carbon fiber, and the like; metal-based materials such as a metal powder, a metal fiber, or the like including copper, nickel, aluminum, silver, and the like; a conductive polymer such as a polyphenylene derivative; or a mixture thereof.

As described above, the negative electrode may include a binder. The binder may improve properties for binding active material particles with one another and with a current collector. The binder may include, e.g., polyvinyl alcohol, carboxylmethyl cellulose, hydroxypropyl cellulose, polyvinyl chloride, carboxylated polyvinyl chloride, polyvinyl fluoride, an ethylene oxide-containing polymer, polyvinylpyrrolidone, polyurethane, polytetrafluoro ethylene, polyvinylidene fluoride, polyethylene, polypropylene, a styrene-butadiene rubber, an acrylated styrene-butadiene rubber, an epoxy resin, nylon, and the like, but are not limited thereto.

In the negative electrode, the mixing ratio of the negative active material and lithium ion adsorbent should be considered; and other amounts of the binder and conductive material may be controlled in a suitable range. The negative active material and lithium ion adsorbent may be mixed at a weight ratio of about 99:1 to about 50:50. Maintaining the mixing ratio of the negative active material with the lithium ion adsorbent at about 99:1 to about 50:50 may help suppress electrolyte solution decomposition and suppress gas ventilation while appropriately maintaining capacity. The negative active material and lithium ion adsorbent may be mixed at a weight ratio of about 99:1 to about 70:30.

The negative electrode may be fabricated by a method including mixing the negative active material, the lithium ion adsorbent, and the binder in an organic solvent to provide an active material composition, and then coating the composition on a current collector. The negative electrode may be fabricated by a method including mixing the negative active material, the lithium ion adsorbent, the binder, and the conductive material in an organic solvent to provide an active material composition, and then coating the composition on a current collector. The electrode manufacturing method is well known, and thus is not described in detail in the present specification.

The organic solvent may include, e.g., N-methylpyrrolidone, but it is not limited thereto. The current collector may include, e.g., a copper foil, a nickel foil, a stainless steel foil, a titanium foil, a nickel foam, a copper foam, a polymer substrate coated with a conductive metal, or a combination thereof.

According to a second aspect of the present invention, a rechargeable lithium battery including the negative electrode of the invention in its first aspect, a positive electrode, and an electrolyte is provided.

Referring to Figure 1, the rechargeable lithium battery 1 according to an embodiment of the present invention may include a battery cell including a positive electrode 4, a negative electrode 2 facing the positive electrode 4, a separator 3 interposed between the positive electrode 4 and the negative electrode 2, and an electrolyte (not shown) impregnating the positive electrode 4, the negative electrode 2, and the separator 3; a battery case 5, and a sealing member 6 sealing the battery case 5.

The positive electrode 4 may include a current collector and a positive active material layer on the current collector. The positive active material may include, e.g., lithiated intercalation compounds that reversibly intercalate and deintercalate lithium ions. The positive active material may include a composite oxide including at least one of cobalt, manganese, and nickel, as well as lithium. For example, any of the following lithium-containing compounds may be used: LiₐA_{1-b}X_{b}D₂ (0.90 ≤ a ≤ 1.8 and 0 ≤ b ≤ 0.5); LiₐA_{1-b}X_{b}O_{2-c}D_{c} (0.90 ≤ a ≤ 1.8, 0 ≤ b ≤ 0.5, and 0 ≤ c ≤ 0.05); LiₐE_{1-b}X_{b}O_{2-c}D_{c} (0.90 ≤ a ≤1.8, 0 ≤ b ≤ 0.5, and 0 ≤ c ≤ 0.05); LiₐE_{2-b}X_{b}O_{4 c}D_{c} (0.90 ≤ a ≤ 1.8, 0 ≤ b ≤ 0.5 and 0 ≤ c ≤ 0.05); LiₐNi_{1-b-c}CoX_{c}D_{α} (0.90 ≤ a ≤1.8, 0 ≤ b ≤0.5, 0 ≤ c ≤ 0.05, and 0 < α ≤ 2); LiₐNi_{1-b-c}Co_{b}X_{c}0_{2-α}T_{α} (0.90 ≤ a ≤ 1.8, 0 ≤ b ≤ 0.5, 0 ≤c ≤ 0.05, and 0 < α < 2); LiₐNi_{1-b-c}Co_{b}X_{c}0₂-_{α}T₂ (0.90 ≤ a ≤ 1.8, 0 ≤ b < 0.5, 0 ≤ c ≤ 0.05, and 0 < α < 2); LiₐNi_{1-b-c}Mn_{b}X_{c}D_{α} (0.90 ≤ a ≤ 1.8, 0 ≤ b ≤ 0.5, 0 ≤ c ≤0.05, and 0 < α ≤ 2); LiₐNi_{1-b-c}Mn_{b}X_{c}O_{2-α}T_{α} (0.90 ≤ a ≤ 1.8, 0 ≤ b ≤ 0.5, 0 ≤ c ≤ 0.05, and 0 < α < 2); LiₐNi_{1-b-c}Mn_{b}X_{c}O_{2-α}T_{α} (0.90 ≤ a ≤ 1.8, 0 ≤ b ≤ 0.5, 0 ≤ c ≤ 0.05, and 0 < α < 2); LiₐNi_{b}E_{c}G_{d}O₂ (0.90 ≤a≤ 1.8, 0 ≤ b ≤ 0.9, 0 ≤ c ≤ 0.5, and 0.001 d ≤0.1); LiₐNi_{b}Co_{c}Mn_{d}GₑO₂(0.90 ≤ a ≤ 1.8, 0 ≤ b ≤ 0.9, 0 ≤ c ≤ 0.5, 0 d ≤0.5, and 0.001 ≤ e ≤ 0.1); LiₐNiG_{b}O₂ (0.90 ≤ a ≤ 1.8 and 0.001 ≤ b ≤ 0.1) LiₐCoG_{b}0₂ (0.90 ≤ a ≤ 1.8 and 0.001 ≤ b ≤ 0.1); LiₐMnG_{b}O₂ (0.90 ≤ a ≤ 1.8 and 0.001 ≤ b ≤ 0.1); LiₐMn₂G_{b}O₄ (0.90 ≤ a ≤ 1.8 and 0.001 ≤ b ≤ 0.1); QO₂; QS₂; LiQS₂; V₂O_{5;} LiV₂O_{5;} LiZO₂; LiNiV0₄; Li_{(3-f)}J₂(PO₄)₃ (0 ≤ f ≤ 2); Li_{(3-f})Fe₂(PO₄)₃ (0 ≤ f ≤ 2); and LiFeP0₄.

In the above formulae, A may include, e.g., Ni, Co, Mn, or a combination thereof; X may include, e.g., Al, Ni, Co, Mn, Cr, Fe, Mg, Sr, V, a rare earth element, or a combination thereof; D may include, e.g., O, F, S, P, or a combination thereof; E may include, e.g., Co, Mn, or a combination thereof; T may include, e.g., F, S, P, or a combination thereof; G may include, e.g., Al, Cr, Mn, Fe, Mg, La, Ce, Sr, V, or a combination thereof; Q may include, e.g., Ti, Mo, Mn, or a combination thereof; Z may include, e.g., Cr, V, Fe, Sc, Y, or a combination thereof; and J may include, e.g., V, Cr, Mn, Co, Ni, Cu, or a combination thereof.

The compound may have a coating layer on a surface thereof or may be mixed with another compound having a coating layer. The coating layer may include a coating element compound including at least one of an oxide of a coating element, a hydroxide of a coating element, an oxyhydroxide of a coating element, an oxycarbonate of a coating element, and a hydroxyl carbonate of a coating element. The compound for the coating layer may be amorphous or crystalline. The coating element included in the coating layer may include, e.g., Mg, Al, Co, K, Na, Ca, Si, Ti, V, Sn, Ge, Ga, B, As, Zr, or a mixture thereof. The coating layer may be formed in a method having no adverse influence on properties of the positive active material by including these elements in the compound. For example, the method may include any suitable coating method such as spray coating, dipping, and the like, but is not illustrated in more detail, since it is well-known to those who work in the related field.

The positive active material may be included in the positive active material layer in an amount of about 90 wt% to about 98 wt%, based on a total weight of the positive active material layer.

The positive active material layer may include a binder and a conductive material. The binder and conductive material may each be included in an amount of about 1 wt% to about 5 wt%, based on the total weight of the positive active material layer.

The binder may improve binding properties of positive active material particles to one another and to a current collector. The binder may include at least one of polyvinyl alcohol, carboxylmethyl cellulose, hydroxypropyl cellulose, diacetyl cellulose, polyvinyl chloride, carboxylated polyvinyl chloride, polyvinyl fluoride, an ethylene oxide-containing polymer, polyvinylpyrrolidone, polyurethane, polytetrafluoro ethylene, polyvinylidene fluoride, polyethylene, polypropylene, a styrene-butadiene rubber, an acrylated styrene-butadiene rubber, an epoxy resin, nylon, and the like, but are not limited thereto.

The conductive material may be included to improve electrode conductivity. Any suitable electrically conductive material may be used as a conductive material, unless it causes an adverse chemical change. The conductive material may include, e.g., carbon-based materials such as natural graphite, artificial graphite, carbon black, acetylene black, ketjen black, carbon fiber, and the like; metal-based materials including a metal powder or a metal fiber of copper, nickel, aluminum, silver, and the like; a conductive polymer such as a polyphenylene derivative; or a mixture thereof.

The current collector may include, e.g., Al foil, but is not limited thereto.

In the positive electrode 4, the positive active material, conductive material, and binder may be mixed at a suitable ratio.

The positive electrode 4 may be fabricated in a method including mixing the active material, conductive material, and binder in a solvent to prepare an active material composition and then coating the composition on a current collector. The electrode manufacturing method is well known and is thus not described in detail in the present specification. The solvent may include, e.g., N-methylpyrrolidone and the like, but is not limited thereto.

In the rechargeable lithium battery, the electrolyte may include a non-aqueous organic solvent and an electrolytic salt.

The non-aqueous organic solvent may serve as a medium for transmitting ions taking part in the electrochemical reaction of a battery.

The non-aqueous organic solvent may include, e.g., a carbonate-based, an ester-based, an ether-based, a ketone-based, an alcohol-based, or an aprotic solvent. The carbonate-based solvent may include, e.g., dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. The ester-based solvent may include, e.g., methyl acetate, ethyl acetate, n-propyl acetate, dimethyl acetate, methylpropionate, ethylpropionate, γ-butyrolactone, decanolide, valerolactone, mevalonolactone, caprolactone, or the like. The ether-based solvent may include, e.g., dibutyl ether, tetraglyme, diglyme, dimethoxyethane, 2-methyltetrahydrofuran, tetrahydrofuran, and the like. The ketone-based solvent may include, e.g., cyclohexanone or the like. The alcohol-based solvent may include, e.g., ethyl alcohol, isopropyl alcohol, and the like. The aprotic solvent may include, e.g., nitriles such as R-CN (where R is a C₂ to C₂₀ linear, branched, or cyclic hydrocarbon, a double bond, an aromatic ring, or an ether bond), amides such as dimethylformamide, dioxolanes such as 1,3-dioxolane, sulfolanes, or the like.

The non-aqueous organic solvent may be used singularly or in a mixture. When the organic solvent is used in a mixture, a mixture ratio may be controlled in accordance with desired battery performance.

The carbonate-based solvent may be prepared by mixing a cyclic carbonate and a linear carbonate. In this case, the cyclic carbonate may be mixed with the linear carbonate in an appropriate mixing ratio. For example, the cyclic carbonate may be mixed with the linear carbonate in a volume ratio of about 9:1 to about 1:9 to about 1:1 to about 1:9, but is not limited thereto.

The non-aqueous organic electrolyte may be prepared by mixing a carbonate-based solvent with an aromatic hydrocarbon-based solvent. The carbonate-based solvent may be mixed with the aromatic hydrocarbon-based organic solvent in a volume ratio of about 1:1 to 30:1.

The aromatic hydrocarbon-based organic solvent may be represented by the following Chemical Formula 4.

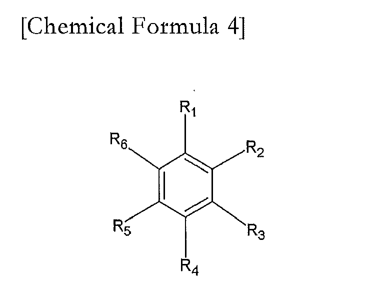

In Chemical Formula 4, R₁ to R₆ may each independently be hydrogen, a halogen, a C₁ to C₁₀ alkyl group, a C₁ to C₁₀ haloalkyl group, or a combination thereof.

The aromatic hydrocarbon-based organic solvent may include, e.g., benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 2,3-difluorotoluene, 2,4-difluorotoluene, 2,5-difluorotoluene, 2,3,4-trifluorotoluene, 2,3,5-trifluorotoluene, chlorotoluene, 2,3-dichlorotoluene, 2,4-dichlorotoluene, 2,5-dichlorotoluene, 2,3,4-trichlorotoluene, 2,3,5-trichlorotoluene, iodotoluene, 2,3-diiodotoluene, 2,4-diiodotoluene, 2,5-diiodotoluene, 2,3,4-triiodotoluene, 2,3,5-triiodotoluene, xylene, or a combination thereof.

The non-aqueous electrolyte may further include an additive including vinylene carbonate, an ethylene carbonate-based compound represented by the following Chemical Formula 5, or a combination thereof in order to improve cycle-life.

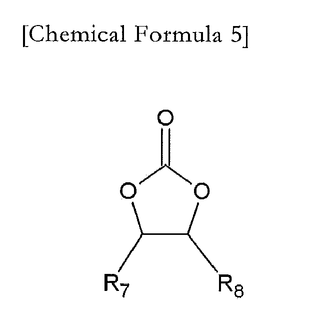

In Chemical Formula 5, R₇ and R₈ may each independently be hydrogen, a halogen, a cyano group (CN), a nitro group (NO₂), and a C₁ to C₅ fluoroalkyl group, provided that at least one of R₇ and R₈ includes a halogen, a cyano group (CN), a nitro group (NO₂), and/or a C₁ to C₅ fluoroalkyl group, and both R₇ and R₈ are not hydrogen.

The ethylene carbonate-based compound may include, e.g., difluoroethylene carbonate, chloroethylene carbonate, dichloroethylene carbonate, bromoethylene carbonate, dibromoethylene carbonate, nitroethylene carbonate, cyanoethylene carbonate, fluoroethylene carbonate, or the like. An amount of the additive used to improve cycle life may be adjusted within an appropriate range.

The added organic solvent may supply ions in a battery and may improve cycle-life and stability of a rechargeable lithium battery.

The electrolytic salt may play a role of supplying ions in a battery. The electrolytic salt may include, e.g., lithium, tetramethyl ammonium, ethyltrimethyl ammonium, diethyldimethyl ammonium, triethylmethyl ammonium, tetraethyl ammonium, dimethyl pyrrolidium, ethylmethyl pyrrolidium, diethyl pyrrolidium, spirobipyrrolidium, piperidine-spiro-pyrrolidium, spiro-bipiperidinium, 1-ethyl-3-methylimidazolium, 1,2-dimethyl-3-propylimidazolium, 1,2-diethyl-3,5-dimethylimidazolium, trimethyl-n-hexylammonium, N-butyl-N-methylpyrrolidinium, N-methyl-N-propylpiperidinium, N-ethyl-N-methylmorpholinium, or a combination thereof as cations.

The electrolytic salt may include an anion including ,e.g., tetrafluoroborate (BF₄-), hexafluorophosphate (PF₆-), perchlorate (ClO₄-), hexafluoro arsenate (AsF₆-), hexafluoroantimony ion (AsF₆-), trifluoromethane sulfonate, bis (trifluoromethanesulfonyl)imide, (trifluoroethanesulfonyl)imide, bis(trifluoroethanesulfonyl)imide, bis(pentafluoroethanesulfonyl)imide, bis(fluorosulfonyl)imide, 2,2,2-trifluoro-N-(trifluoromethanesulfonyl)acetamide, pentafluoroethane trifluoroborate, tri(pentafluoroethane)trifluorophosphate, C₄F₉SO₃-,A1O₂-, AlCl₄-, N(CₓF₂ₓ₊₁SO₂)(C_{y}F_{2y+1}SO₂)- (x and y are natural numbers), Cl-, I-, B(C₂O₄)₂-, or a combination thereof.

The electrolytic salt may be used in a concentration of about 0.1 M to about 2.0 M. Maintaining the concentration of the electrolytic salt at about 0.1 M to about 2.0 M may help ensure that the electrolyte has excellent performance and lithium ion mobility due to optimal electrolyte conductivity and viscosity.

As described above, the rechargeable lithium battery may further include the separator 3 between the negative electrode and the positive electrode. Suitable separator materials may include, e.g., polyethylene, polypropylene, polyvinylidene fluoride, and multi-layers thereof such as a polyethylene/polypropylene double-layered separator, a polyethylene/polypropylene/polyethylene triple-layered separator, or a polypropylene/polyethylene/polypropylene triple-layered separator.

The following examples illustrate this disclosure in more detail. However, the following are exemplary embodiments and are not limiting.

### Example 1

An artificial graphite of mesophase carbon microbeads (MCMB) (manufactured with heat treatment at 2,800 °C) was mixed with an acid.

The acid was prepared by mixing concentrated sulfuric acid (concentration: 98 volume%) with nitric acid (concentration: 63 volume%) in a volume ratio of 1:3. The MCMB was mixed with the acid in a weight ratio of 1:4.

An oxidizing agent of potassium permanganate was added to the mixture. The potassium permanganate was added in portions of 15 parts by weight, based on 100 parts by weight of the MCMB, 10 times, so the total amount of potassium permanganate added was 150 parts by weight, based on 100 parts by weight of MCMB.

The resultant product was allowed to stand for 48 hours. During this time, the sulfuric acid was inserted or permeated into the interlayer structure of the MCMB to oxidize the MCMB.

After completing the reaction, the product was filtered to provide oxidized MCMB and washed using distilled water until neutralized.

The washed product was sufficiently dried in a 120 °C drying oven to remove moisture. The oxidized MCMB was primarily heat-treated by increasing the temperature to 150 °C at a temperature increasing rate of 2 °C/min while maintaining a vacuum of 0.05 mbar. The primarily heat-treated product was secondarily heat-treated by increasing the temperature to 250 °C at a temperature increasing rate of 5 °C/min or less and then maintained for 12 hours at the increased temperature while injecting nitrogen at a rate of 10 mL/min.

According to the process, a lithium ion adsorbent of a crystalline carbonaceous material with controlled interplanar spacing was obtained. The lithium ion adsorbent had a specific surface area of 34 m²/g and a tap density of 0.78 g/cc. The increased interplanar spacing d002 was 0.450 nm when measured using a CuKα ray, and the ratio (b/a) of the peak height (b) at 2θ=26º to the peak height (a) at 2θ=23.5º was 1.

### Example 2

A graphite active material, the lithium ion adsorbent obtained from Example 1, a conductive material of carbon black, and a binder of polyvinylidene fluoride dissolved in N-methyl pyrrolidone solvent were mixed to provide an active material slurry. The amounts of the graphite active material, lithium ion adsorbent, conductive material, and binder were 65 wt%, 20 wt%, 5 wt%, and 10 wt%, respectively.

The slurry was coated on a copper current collector to provide a negative electrode.

Using the negative electrode, a lithium metal counter electrode, and an electrolyte, a half-cell was fabricated. The electrolyte included a 1 M solution of a LiPF₆ lithium salt in a mixed solvent of ethylene carbonate, dimethyl carbonate, and diethyl carbonate (3:3:1 volume ratio).

### Example 3

A LiCoO₂ positive active material, activated carbon, a carbon black conductive material, and a binder of polyvinylidene fluoride dissolved in N-methyl pyrrolidone solvent were mixed to provide an active material slurry. The amounts of the active material, activated carbon, conductive material, and binder were 65 wt%, 20 wt%, 5 wt%, and 10 wt%, respectively.

The slurry was coated on an aluminum current collector to provide a positive electrode.

Using the positive electrode, the negative electrode of Example 2, and an electrolyte, an 18650 type of cylindrical full cell was fabricated. The electrolyte included a 1M LiPF₆ lithium salt solution in a mixed solvent of ethylene carbonate, dimethyl carbonate, and diethyl carbonate (3:3:1 volume ratio).

### Comparative Example 1

A half-cell was fabricated in accordance with the same procedure as in Example 3, except that activated carbon having a specific surface area of 1450 m²/g was used to fabricate a negative electrode instead of the lithium ion adsorbent of Example 1.

### Example 4

An 18650 type of cylindrical full cell was fabricated in accordance with the same procedure as in Example 3, except that a solution of TEABF₄ (triethyl ammoniumtetrafluoric boron) and LiBF₄ dissolved in propylene carbonate was used as an electrolyte. The mixing ratio of TEBF₄ and LiBF₄ was 30:70 wt%, and the concentration of TEABF₄ and LiBF₄ was 1M.

### Comparative Example 2

An 18650 type of cylindrical full cell was fabricated in accordance with the same procedure as in Example 3, except that a negative electrode was prepared by using activated carbon instead of the lithium ion adsorbent of Example 1.

### Analysis

Half-cells manufactured according to Example 2 and Comparative Example 1 were charged/discharged under conditions of 0.01 V cut-off charge and 1.5 V cut-off discharge while varying charge and discharge rates to 1 C, 5 C, 10 C, and 20 C. Charge capacity and discharge capacity by charging and discharging were measured; and the charge and discharge efficiency was calculated based on the measured charge and discharge capacities and are presented in the following Table 1. Also, the charge and discharge capacity percents were calculated at 5 C, 10 C, and 20 C based on 1 C, and the results are presented as charge characteristics and discharge characteristics in the following Table 1.

**Table 1**

| | Charge and discharge efficiency (%) | Charge characteristic (%) | | | Discharge characteristics (%) | | |
|---|---|---|---|---|---|---|---|
| | | 5C/1C | 10C/1C | 20C/1C | 5C/1C | 10C/1C | 20C/1C |
| Example 2 | 75 | 78 | 51 | 36 | 82 | 61 | 58 |
| Comparative Example 1 | 66 | 53 | 32 | 15 | 68 | 43 | 32 |

It may be seen from Table 1 that the charge and discharge efficiency of the half-cell of Example 2 was superior to that of the half-cell of Comparative Example 1. Without being bound by theory, this may be because less of the SEI film was generated due to a small specific surface area of the lithium ion adsorbent used in Example 2, which was as small as 34 m²/g, compared with activated carbon (1450 m²/g). Also, the interplanar spacing d002 of the lithium ion adsorbent used in Example 2 was as wide as about 0.450 nm. Thus, lithium ions went in and out quickly and easily during the charge and discharge of the battery. Therefore, the charge and discharge speed was quick and high rate characteristics were excellent. Also, in Comparative Example 1, intercalation prevailed over adsorption in activated carbon, and reactivity of the lithium ions was decreased, thus the effect of Comparative Example 1 is relatively lower than that of Example 2.

Charge and discharge of the full cells according to Examples 3 and 4, and Comparative Example 2 were performed while varying the charge and discharge rates to 1 C, 5 C, 10 C, and 20 C under the conditions of 4.3 V cut-off charge and 3 V cut-off discharge condition. The charge and discharge capacity percents were calculated at 5 C, 10 C, and 20 C based on 1 C and are presented as charge characteristics and discharge characteristics in the following Table 2. Also, charge and discharge were performed 500 times at 6 C, and the percent of the discharge capacity at the 500th charge and discharge to the discharge capacity at the first charge and discharge was calculated and is presented as cycle-life characteristics in the following Table 2.

**Table 2**

| | Charge characteristic (%) | | | Discharge characteristics (%) | | | Cycle-life (%) |
|---|---|---|---|---|---|---|---|
| | 5C/1C | 20C/1C | 50C/1C | 5C/1C | 20C/1C | 50C/1C | |
| Example 3 | 82 | 65 | 48 | 96 | 73 | 58 | 92 |
| Example 4 | 84 | 68 | 51 | 94 | 75 | 62 | 93 |
| Comparative Example 2 | 62 | 54 | 28 | 92 | 47 | 31 | 74 |

As shown in Table 2, the charge and discharge characteristics of lithium full cells manufactured according to Examples 3 and 4 were superior to those of the battery of Comparative Example 2. In Comparative Example 2, intercalation prevailed over adsorption in activated carbon. Thus, the reactivity of lithium ions was decreased. Accordingly, the effect acquired from Comparative Example 2 was relatively lower than that of Examples 3 and 4.

As a result of cycle-life characteristics test in which full charge and discharge was performed at 6 C within about 10 minutes, it may be seen that the full cells of Examples 3 and 4 having smooth charge and discharge rates had much better cycle-life than the full cell of Comparative Example 2. Without being bound by theory, this may be because resistance of the active material was dispersed into the lithium ion adsorbent used in Examples 3 and 4 and the active material was not degraded in high-rate charge and discharge, compared to Comparative Example 2.

By way of summation, in order to improve power characteristics of a rechargeable lithium battery, a power enforcing material (capacitor component) added to a negative electrode, a positive electrode, or both, has been explored, yet satisfactory results have been elusive. Such results are attained, however, with the invention disclosed herein, which provides a negative electrode for a rechargeable lithium battery having improved power and capacity characteristics.

Whilst the present invention has been described in connection with certain exemplary embodiments thereof, it is to be understood that the invention is not limited to the disclosed embodiments, but, on the contrary, is intended to cover various modifications and equivalent arrangements included within the scope of the appended claims.

## Claims

1. A negative electrode for a rechargeable lithium battery, the negative electrode comprising:
a negative active material; and
a lithium ion adsorbent having a specific surface area of about 10 m²/g to about 100 m²/g.

2. The negative electrode as claimed in claim 1, wherein the specific surface area of the lithium ion adsorbent is about 10 m²/g to about 50 m²/g.

3. The negative electrode as claimed in claim 1 or claim 2, wherein the lithium ion adsorbent:
shows 2θ=23°±5.0° and 2θ=26.5º±1.0ºpeaks at the (002) plane when its X-ray diffraction is measured using a CuKα ray, and
has a ratio (b/a) of about 0.1 to about 10, b being a height of the peak at 2θ=26.5º±1.0º and a being a height of the peak at 2θ=23º±5.0º.

4. The negative electrode as claimed in claim 3, wherein the lithium ion adsorbent has a ratio (b/a) of about 0.1 to about 1, b being the height of the peak at 2θ=26.5°±1.0° and a being the height of the peak at 2θ=23°±5.0°.

5. The negative electrode as claimed in any preceding claim, wherein the lithium ion adsorbent has interplanar spacing d002 of about 0.34 nm to about 1 nm, measured by X-ray diffraction using a CuKα ray.

6. The negative electrode as claimed in claim 5, wherein the lithium ion adsorbent has interplanar spacing d002 of about 0.35 nm to about 0.8 nm, measured by X-ray diffraction using a CuKα ray.

7. The negative electrode as claimed in any preceding claim, wherein the lithium ion adsorbent has a tap density of about 0.3 g/cc to about 1.0 g/cc.

8. The negative electrode as claimed in any preceding claim, wherein the negative active material and the lithium ion adsorbent are included at a weight ratio of about 99:1 to about 50:50.

9. The negative electrode as claimed in any preceding claim, further comprising a conductive material.

10. The negative electrode as claimed in any preceding claim, wherein the lithium ion adsorbent includes crystalline carbon including natural graphite, artificial graphite, mesophase carbon microbeads, or a combination thereof.

11. The negative electrode as claimed in any preceding claim, wherein the negative active material includes a material capable of reversibly intercalating/deintercalating lithium ions, a lithium metal, a metal alloy of lithium, a material capable of doping and dedoping lithium, or a transition metal oxide.

12. A rechargeable lithium battery, comprising:
the negative electrode of any one of claims 1 to 11;
a positive electrode; and
an electrolyte.

13. Use of a lithium ion adsorbent having a specific surface area of about 10 m²/g to about 100 m²/g in a negative electrode of a rechargeable lithium battery.
